# EUROPEAN PATENT APPLICATION

(11) **EP 4 556 677 A1**
(43) Date of publication of application: **21.05.2025**
(21) Application number: 23210795.3
(22) Date of filing: 20.11.2023
(51) Int. Cl.: E21B 7/02

(54) **DRILL RIG NAVIGATION CORRECTION**

(71) Applicant: Sandvik Mining and Construction Oy, 33330 Tampere (FI)
(72) Inventor: HANSKI, Sami, 33330 Tampere (FI); KOLI, Heikki, 33330 Tampere (FI); PESOLA, Mikko, 33330 Tampere (FI); VIINIKAINEN, Mikko, 33330 Tampere (FI)
(74) Representative: Sandvik

(57) **Abstract**

According to an aspect, an apparatus for controlling a drilling rig during drilling of a round in an underground mine is provided. The drilling rig may comprise a carrier, a drilling boom attached to the carrier and a measurement device associated with the carrier. The apparatus may be configured to control navigation of the drilling rig, the navigation comprising determining a position and orientation of the drilling rig with respect to a coordinate system of a drilling site. The apparatus may be configured to receive, during drilling of the round, data from the measurement device associated with the carrier. The apparatus may be configured to detect an orientation change of the carrier based on the data from the measurement device, and to initiate, during drilling of the round, a navigation correction action of the drilling rig based on detecting the orientation change. The apparatus may be configured in the drilling rig, or in a separate device, such as a server, a server node, or an individual processing unit with access to a computer-readable memory.

## Description

### TECHNICAL FIELD

This disclosure relates to an apparatus, method, and a drilling rig. Particularly, this disclosure relates to an apparatus for providing a navigation correction action for a drilling rig.

### BACKGROUND

Tunnels, underground storage silos and other rock facilities may be excavated in rounds. In a tunnel face, drill holes are drilled which are then charged and blasted after drilling. One blast detaches from the rock an amount of rock material that equals that of one round. When mining with a drilling rig, navigation is a term used when a drilling rig is given the necessary information on its surroundings on how to execute a single drilling round of a tunnel face. A single drilling round is a process of drilling the tunnel face, when the drill rig is supposed to be stationary with respect to the floor of the tunnel, while a drilling boom is moving and executing the drilling round. A drilling round is based on a drill plan set by a mine designer, and one drill plan may comprise, for example, a one-meter-deep arch-shaped tunnel section with straight sides. However, the tunnel floor is rarely level (for example, the floor may have small loose rocks), and the drilling process exerts major opposite forces with respect to the drilling direction that may move the drill rig in an unwanted position. Furthermore, the ground stability of the floor may cause additional movement of the drill rig, causing the drill rig to deviate from its original, target coordinates. In addition, the drill rig might get hit with unexpected debris that may move the drill rig.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure comprise an apparatus for controlling a drilling rig during drilling of a round in a mining environment, wherein the apparatus is able to initiate a navigation correction action of the drilling rig based on an orientation change of a carrier of the drilling rig. This and other benefits may be achieved by the features of the independent claims. Further advantageous implementation forms are provided in the dependent claims, the description, and the drawings.

According to a first aspect, there is provided an apparatus for controlling a drilling rig during drilling of a round, the drilling rig comprising a carrier, a drilling boom attached to the carrier, and a measurement device associated with the carrier. The apparatus comprises at least one processor; and at least one memory including computer program code, the at least one memory and the computer program code configured to with the at least one processor, cause the apparatus at least to control navigation of the drilling rig, the navigation comprising determining a position and orientation of the drilling rig with respect to a coordinate system of a drilling site; receive, during drilling of the round, data from the measurement device associated with the carrier; detect an orientation change of the carrier based on the data from the measurement device; and initiate, during drilling of the round, a navigation correction action of the drilling rig based on detecting the orientation change.

In an implementation form of the first aspect, when initiating the navigation correction action, the at least one memory and the computer program code are configured to with the at least one processor, cause the apparatus at least to correct the orientation of the carrier to a predefined position.

In an implementation form of the first aspect, when initiating the navigation correction action, the at least one memory and the computer program code are configured to with the at least one processor, cause the apparatus at least to control navigation by re-determining a position and orientation of the drilling rig with respect to the coordinate system of a drilling site.

In an implementation form of the first aspect, when initiating the navigation correction action, the at least one memory and the computer program code are configured to with the at least one processor, cause the apparatus at least to automatically correct the orientation of the carrier.

In an implementation form of the first aspect, when initiating the navigation correction action, the at least one memory and the computer program code are configured to with the at least one processor, cause the apparatus at least to control at least one ground support of the drilling rig to reposition the drilling rig to an original navigation position.

In an implementation form of the first aspect, when initiating the navigation correction action, the at least one memory and the computer program code are configured to with the at least one processor, cause the apparatus at least to transmit a notification to an operator of the drilling rig to initiate at least one corrective action.

In an implementation form of the first aspect, when initiating the navigation correction action, the at least one memory and the computer program code are configured to with the at least one processor, cause the apparatus at least to determine the changed orientation of the carrier; and compensate for the changed orientation of the carrier by changing a position and/or orientation of the drilling boom.

In an implementation form of the first aspect, when initiating the navigation correction action, the at least one memory and the computer program code are configured to with the at least one processor, cause the apparatus at least to provide at least one control signal for correcting the navigation.

In an implementation form of the first aspect, the at least one memory and the computer program code are configured to with the at least one processor, cause the apparatus at least to determine the navigation correction action based at least in part on the data from the measurement device.

In an implementation form of the first aspect, the at least one memory and the computer program code are configured to with the at least one processor, cause the apparatus at least to transmit a request to determine the navigation correction action based at least in part on the data from the measurement device.

In an implementation form of the first aspect, the measurement device comprises an inclination measurement device.

In an implementation form of the first aspect, the measurement device comprises a lidar device.

According to a second aspect, there is provided a method for a drilling rig comprising a carrier, a drilling boom attached to the carrier, and a measurement device associated with the carrier. The method comprises controlling navigation of the drilling rig, the navigation comprising determining a position and orientation of the drilling rig with respect to a coordinate system of a drilling site; receiving, during drilling of the round, data from the measurement device associated with the carrier; detecting an orientation change of the carrier based on the data from the measurement device; and initiating, during drilling of the round, a navigation correction action of the drilling rig based on detecting the orientation change.

In an implementation form of the second aspect, when initiating the navigation correction, the method comprises correcting the orientation of the carrier to a predefined position.

In an implementation form of the second aspect, when initiating the navigation correction, the method comprises controlling navigation by re-determining a position and orientation of the drilling rig with respect to the coordinate system of a drilling site.

In an implementation form of the second aspect, when initiating the navigation correction action, the method comprises automatically correcting the orientation of the carrier.

In an implementation form of the second aspect, when initiating the navigation correction action, the method comprises controlling at least one ground support of the drilling rig to reposition the drilling rig to an original navigation position.

In an implementation form of the second aspect, when initiating the navigation correction action, the method comprises transmitting a notification to an operator of the drilling rig to initiate at least one corrective action.

In an implementation form of the second aspect, when initiating the navigation correction action, the method comprises determining the changed orientation of the carrier; and compensating for the changed orientation of the carrier by changing a position and/or orientation of the drilling boom.

In an implementation form of the second aspect, when initiating the navigation correction action, the method comprises providing at least one control signal for correcting the navigation.

In an implementation form of the second aspect, the method comprises determining the navigation correction action based at least in part on the data from the measurement device.

In an implementation form of the second aspect, the method comprises transmitting a request to determine the navigation correction action based at least in part on the data from the measurement device.

In an implementation form of the second aspect, the measurement device comprises an inclination measurement device.

In an implementation form of the second aspect, the measurement device comprises a lidar device.

According a third aspect, there is provided a drilling rig comprising a carrier, a drilling boom, a measurement device associated with the carrier, and the apparatus according to the first aspect.

According to a fourth aspect, there is provided a computer program comprising instructions for causing an apparatus according to the first aspect, to carry out the method according to the second aspect.

According to a fifth aspect, a non-transitory computer readable medium comprises a computer program comprising instructions for causing an apparatus to carry out the method of the second aspect.

According to a sixth aspect, there is provided an apparatus for controlling a drilling rig during drilling of a round, the drilling rig comprising a carrier, a drilling boom attached to the carrier, and a measurement device associated with the carrier. The apparatus comprises means for: controlling navigation of the drilling rig, the navigation comprising determining a position and orientation of the drilling rig with respect to a coordinate system of a drilling site; receiving, during drilling of the round, data from the measurement device associated with the carrier; detecting an orientation change of the carrier based on the data from the measurement device; and initiating, during drilling of the round, a navigation correction action of the drilling rig based on detecting the orientation change

### BRIEF DESCRIPTION OF THE DRAWINGS

The accompanying drawings, which are included to provide a further understanding of the example embodiments and constitute a part of this specification, illustrate examples and together with the description help to explain the principles of the example embodiments. In the drawings:
**FIG. 1** illustrates a drilling rig for mining environment according to an example embodiment.
**FIG. 2** illustrates an apparatus for a drilling rig according to an example embodiment.
**FIG. 3A** illustrates a top-down view of a mining tunnel according to an example embodiment.
**FIG. 3B** illustrates a front-view of a drill plan according to an example embodiment.
**FIG. 3C** illustrates a top-down view of navigation calibration for a drilling rig using a total station according to an example embodiment.
**FIG. 3D** illustrates a pseudo three dimensional view illustrating drill bit navigation calibration according to an example embodiment.
**FIG. 4** illustrates a method for initiating a navigation correction for a drilling rig according to an example embodiment.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The detailed description sets forth a drilling rig and a device for the drilling rig. Furthermore, the detailed description describes how the drilling rig may be operated on a mining environment in order to clarify the disclosure.

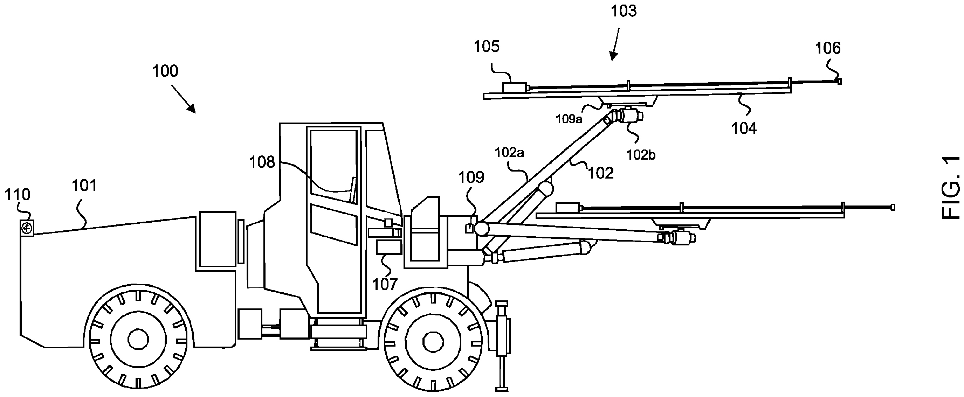

FIG. 1 illustrates an example of a drilling rig 100. In the example of FIG. 1, the drilling rig 100 comprises a carrier 101, one or more drilling booms 102 and drilling units 103 associated with the one or more drilling booms 102. The drilling boom 102 depicted in FIG. 1 may comprise two or more parts, objects, or portions 102a, 102b, connected by a joint. The drilling boom 102 may be further connected to a drilling unit 103 by a joint. In the example of FIG. 1, the drilling unit 103 comprises a feed beam 104 on which a drilling device 105 may be moved by means of a feed device. Furthermore, the drilling unit 103 may comprise a tool 106 with which impact pulses given by a percussion device of the drilling device 105 are transmitted to the wall to be drilled. A 'wall' may comprise a rock wall in a tunnel such as a tunnel face. A measurement device 110 may be associated with the carrier 101. The measurement device 110 may comprise an inertial measurement device, such as an accelerometer, inclinometer, IMU (Inertial Measurement Unit), AHRS (Attitude and Heading Reference Systems) sensor module or a gyroscope. The drilling rig 100 may be a full-electric drilling rig, a diesel operated drilling rig or a hybrid drilling rig. The drilling rig can be driven manually. Alternatively, the drilling rig can be a remotely operated drilling rig or it can be an autonomously operating drilling rig.

The drilling rig 100 may further comprise at least one control unit 107, arranged to control actuators of the drilling rig 100, for example. The control unit 107 may comprise a device for receiving operator commands and information to the control unit 107. In some embodiments, the control unit 107 may be configured to control at least boom automation control related operations, and there may be one or more other control units in the drilling rig for controlling other operations.

Furthermore, one or more sensors 109 may be arranged for determining a current position and orientation of portions of the boom 102 and further the tool 106. Such sensors 109 may locate in connection with the boom 102, or alternatively the sensing may be executed remotely from the carrier 101 or even elsewhere. The sensing data may be provided to the control unit 107 (or another control unit for positioning), which may be configured to execute appropriate computations.

A mine designer plans tunnels as a tunnel plan. A tunnel plan may comprise multiple drilling rounds, and a drilling round may comprise a drill plan in order to form the tunnel.

A drill plan defines positions and orientations of holes to be drilled. For example, a drill plan may define a starting position and direction of a hole in a three-dimensional coordinate system or a starting point and an end point of a hole, thereby defining the length of the hole. The drill plan may define locations of the holes, for example, in a tunnel coordinate system. The drill plan may define a pattern of the holes to be drilled such as holes arranged in multiple drill hole rows .

The drilling rig 100 may be transported (for example, driven automatically or by an operator) to a drilling site comprising a tunnel face to be drilled according to a drill plan.

In order to follow a drill plan of the tunnel face, the drilling rig 100 is navigated by determining a position and orientation of the drilling rig 100 with respect to the tunnel face in a tunnel coordinate system. A position of the drilling rig may comprise a position of a portion of the drilling rig such as a position of the drilling device 105.

The navigation may comprise different ways of determining a position and orientation of the drilling rig 100 with respect to the tunnel face in the tunnel coordinate system. For example, navigation may comprise total station navigation, laser navigation or drill bit navigation.

The navigation may comprise determining drilling round information on surroundings of the drilling rig 100, comprising information on how to execute the drilling round. The drilling round information may comprise a set of two-dimensional (2D) or three-dimensional (3D) coordinates of the holes to be drilled. The drilling round information may further comprise information from the mine designer such as the desired direction of drilling (where the tunnel needs to go) and the size and depth of the drilling round.

The navigation may further comprise positioning the drilling device 105 such as the feed beam 104 at a target pose based on hole position and orientation information defined in the drill plan. A target pose may comprise a position and alignment of the drilling device 105 or the feed beam 104.

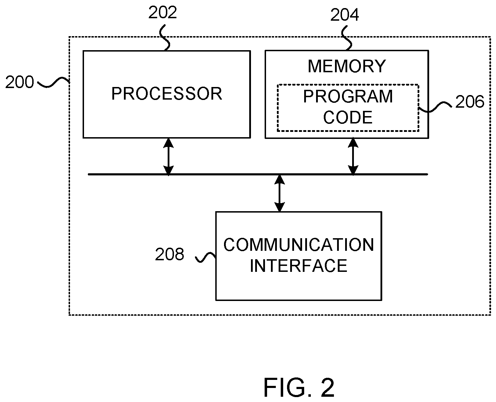

FIG. 2 illustrates a block diagram of an apparatus 200 for a drilling rig, for example, the drilling rig 100 illustrated in FIG. 1. The apparatus 200 may comprise, for example, a control apparatus such as control unit 107 or some other control unit. The apparatus 200 is configured to practice one or more example embodiments.

The apparatus 200 may comprise at least one processor 202 and at least one memory 204 including computer program code 206, wherein the at least one memory 204 with the computer program 206 code may be configured, with the at least one processor 202, to cause the apparatus 200 at least to control navigation of the drilling rig 100, the navigation comprising determining a position and orientation of the drilling rig 100 with respect to a coordinate system of a drilling site; receive, during drilling of the round, data from the measurement device 110 associated with the carrier 101; detect an orientation change of the carrier 101 based on the data from the measurement device 110 during drilling of a round; and initiate, during drilling of the round, a navigation correction action of the drilling rig based on detecting the orientation change. A single drilling round may refer to a process of drilling a tunnel face, when the drill rig is supposed to be stationary with respect to the floor of the tunnel, while a drilling boom is moving and executing the drilling round. The apparatus 200 may be used to reduce the time for correcting the navigation of the drilling rig, as the apparatus 200 may be configured to automatically initiate a navigation correction in response to detecting unwanted movements via the measurement device 110. Further, time is saved as there is no need to initiate re-navigation, for example, manually by an operator.

The apparatus 200 may be configured to monitor, for example, one or more changes in a position of the carrier (101) affecting the navigation and the apparatus 200 may be configured to initiate navigation correction actions based on determining movement via the measurement device 110 associated with the carrier 101.

The navigation correction action may comprise for example, transmitting a notification to an operator, controlling an additional device that may be configured to correct the navigation, or controlling actuators of the drilling rig 100 itself, depending on the configuration depth of the system. In an example embodiment, the control unit 107 might not be installed on the drilling rig 100.

The apparatus 200 may also include an input/output module (not shown in FIG. 2), and/or a communication interface 208 for wired and/or wireless communication. The communication interface 208 may be configured to exchange data between different devices, for example, the measurement device 110 or a device controlling actuators within the drilling rig 100, for example, the control unit 107, or the like. The input/output module may comprise, for example, connections to peripheral components, such as a screen, touchscreen or a keyboard, that a user may configure the apparatus 200 with, or via which the user may obtain information from the apparatus 200.

When the apparatus 200 is configured to implement some functionality, some component and/or components of apparatus 200, for example, the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, the apparatus 200 comprises a processor or processor circuitry, such as for example a microcontroller, configured by the program code 206, when executed, to execute the embodiments of the operations and functionality described herein. Program code 206 is provided as an example of instructions which, when executed by the at least one processor 202, cause performance of apparatus 200.

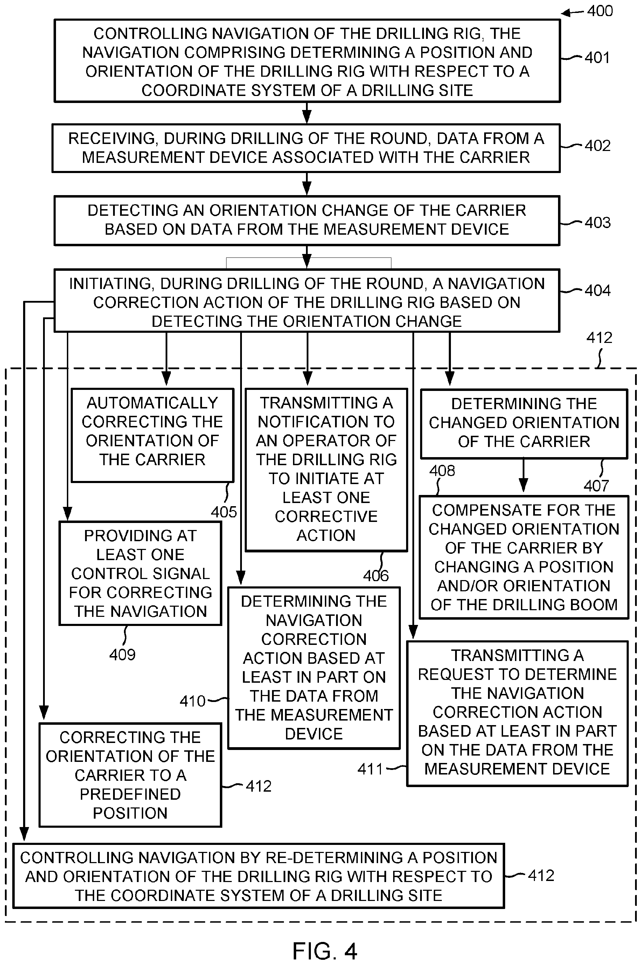

An example embodiment of a computer program comprises instructions, stored in a computer-readable storage medium, that causes an apparatus to perform the method(s) described herein, such as the method illustrated in FIG. 4.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

The apparatus 200 may be configured to perform, or cause performance of, method(s) described herein or comprise means for performing method(s) described herein. In one example, the means comprises the at least one processor 202, the at least one memory 204 including program code 206 configured to, when executed by the at least one processor 202, cause the apparatus 200 to perform the method(s). In general, computer program instructions may be executed on means providing generic processing functions. Such means may be embedded for example in a personal computer, a tablet computer, a mobile device, a smart phone, a network device, or the like. The method(s) may be thus computer-implemented, for example based algorithm(s) executable by the generic processing functions, an example of which is the at least one processor 202. The means may comprise transmission or reception means, for example one or more radio transmitters or receivers, which may be coupled or be configured to be coupled to one or more antennas, or transmitter(s) or receiver(s) of a wired communication interface. Although apparatus 200 is illustrated as a single device, it is appreciated that, wherever applicable, functions of apparatus 200 may be distributed to a plurality of devices.

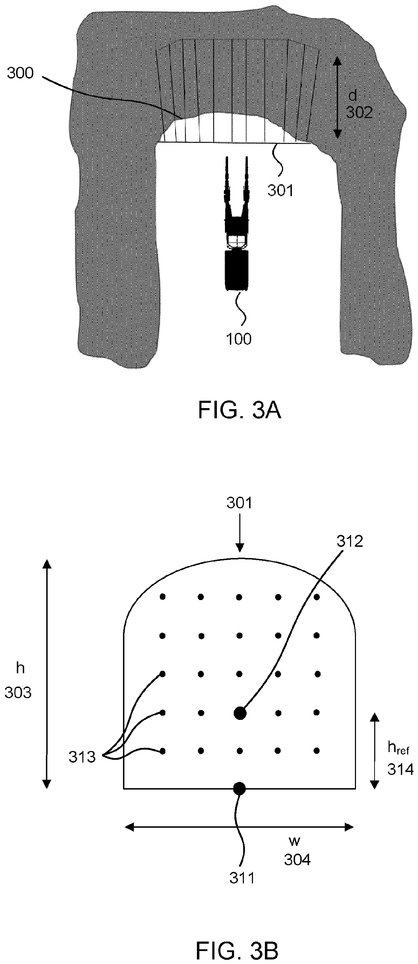

FIG. 3A illustrates a top-down view of the drilling rig 100 illustrated in FIG. 1 at a drilling site in an underground mine. A tunnel face 300 is illustrated as having an irregular shape. A drill plan 301 is illustrated as comprising a certain depth d 302.

FIG. 3B illustrates a front-view of the drill plan 301, where the drill plan 301 illustrates a shape of the tunnel with straight sides in a tunnel with a height h 303 and a width w 304 and wherein the drill plan 301 further comprises a coordinate set with an origin 311 and a plurality of drilling positions 313 located on the drill plan 301. In some examples, the drill plan 301 may further comprise a reference point 312. Each drilling position 313 may comprise one drill hole. The origin 311 may be defined to be at a center point of the tunnel at floor level in this example, and the reference point 312, if determined, is illustrated as having been placed above a reference height 314 with respect to the origin 311. The plurality of drilling positions 313 are only illustrated as the three addressed locations to maintain clarity, however, all of the smaller points illustrated in FIG. 3B may be regarded as drill holes.

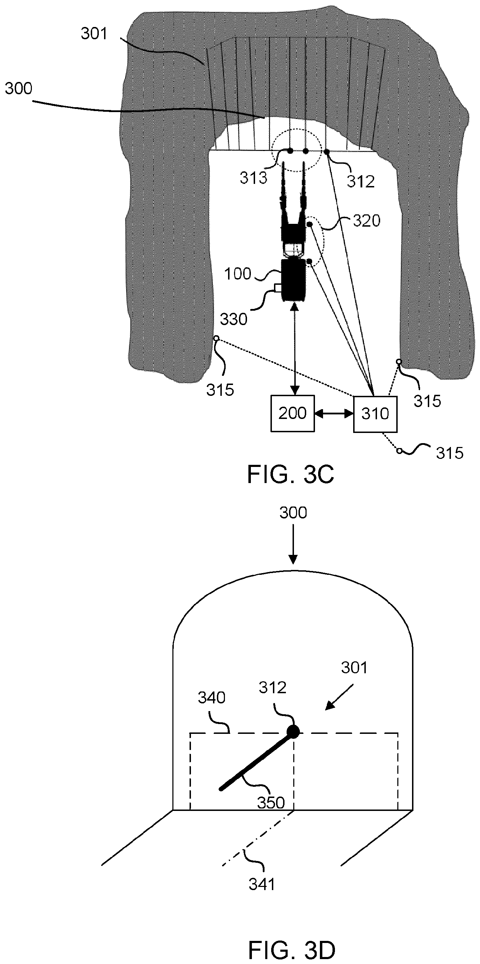

Continuing from the examples of FIG. 3A and 3B, FIG. 3C illustrates an example on how the reference point 312 may be set on the wall face 300, and how two sensor points 320 are set on the drilling rig 100. A total station 310 may be set to measure the difference between the reference point 312 and the sensor points 320. The sensor points 320 may comprise the one or more sensors 109 illustrated in FIG. 1, and the one or more sensors 109 may comprise, for example, a prism. Generally, the total station 310 may be given three calibration points 315 to define the location/position of the total station 310 in the tunnel before setting up the navigation.

FIG. 3C also illustrates a measurement device 330 attached to the drilling rig 100. The measurement device 330 may comprise the measurement device 110 of FIG. 1.

As the apparatus 200 is configured to obtain data from the measurement device 330, and if the measurement device 330 detects unwanted movement of the drilling rig 100, the apparatus 200 may request data from the total station 301. The apparatus 200 may be configured to receive data on unwanted movement of the drilling rig 100 provided by the total station 310. The total station 310 is only given as an example, as other drilling rig navigation methods exists, such as laser navigation or drill bit navigation, nonetheless, a reference point system exists, and a measurement device should be able to measure a difference between the reference point and drilling rig 100 during drilling a round, and provide data based on the difference between the reference position and the current position.

In the drill bit navigation, a surveyor paints an instruction on the tunnel faces/floor face 300. FIG. 3D illustrates how the drill bit navigation may be configured. The drill plan 301 now comprises a dashed line, illustrating a drilling profile 340 and a dot-dash line illustrating a tunnel direction line 341. The reference point 312 in this example lies in the middle of the drilling profile's 340 upper bound. One drilling boom 350 may then be positioned to the reference point 312 and aligned with the tunnel direction line 341. The drilling boom 350 may comprise one drilling boom from the one or more drilling booms 102 of FIG. 1. Now that the reference point is known and the drilling rig 100 is aligned properly (e.g., navigation is configured), another drilling boom may be used to drill the wall. However, a drilling depth for each hole in the drill plan 301 is defined, as the drilling rig 100 may be positioned at a certain distance away from the wall face 300 and the wall face 300 may be uneven. The surveyor may, for example, start the drilling from the furthest hole and then drill a shorter round, to create a more even wall for the next drilling round.

In the drill bit navigation, if the measurement device 110 detects an orientation change of the carrier during drilling of a round, the navigation correction action may comprise, for example, transmitting a notification to the surveyor of the drilling rig 100, and the surveyor may then perform re-navigation.

In some embodiments, the apparatus 200 may be installed on-site, or on the drilling rig 100 itself, or it may be a remote server or a cloud device, and it is configured to directly control portions of the drilling rig 100, depending on system configuration. In some embodiments, the properties of the apparatus 200 may be installed on the total station 310.

In an example embodiment of the apparatus 200, when initiating the navigation correction action, the apparatus 200 may be configured to correct the orientation of the carrier to a predefined position. The predefined position may be, for example, an original navigation position.

In another example embodiment, when initiating the navigation correction action, the apparatus 200 may be configured to control navigation by re-determining a position and orientation of the drilling rig 100 with respect to the coordinate system of a drilling site.

In an example embodiment of the apparatus 200, wherein when initiating the navigation correction action, the at least one memory 204 and the computer program code 206 are configured, with the at least one processor 202, to cause the apparatus 200 at least to automatically correct the orientation of the carrier 101. For example, the apparatus 200 may be configured to transmit data to an actuator controller installed on the drilling rig 100, for example, the control unit 107.

Automatically correcting the orientation of the carrier 101 may comprise, for example, providing instructions to, for example, the control unit 107. These instructions may comprise data such as how much the drilling booms should be moved and in which angle the drilling boom(s) should be aligned to compensate for the orientation change. For example, an orientation change may be detected by the measurement device 110, that the drilling boom 102 executing a hole defined by a certain drilling position 313 in the drill plan has an azimuth shift of 15 degrees, and an altitude shift of 10 degrees. The apparatus 200 may be configured to calculate the data for the control unit 107 on how much the drilling boom 102 actuators should be controlled to re-obtain the proper navigation position.

In another example embodiment of the apparatus 200, when initiating the navigation correction action, the at least one memory 204 and the computer program code 206 are configured, with the at least one processor 202, to cause the apparatus 200 at least to transmit a notification to an operator of the drilling rig 100 to initiate at least one corrective action. In this example, as the drilling rig 100 might not comprise any device that may receive data directly from the apparatus 200, an operator may be notified to execute the navigation correction based on data calculated by the apparatus 200. In an example embodiment, when the corrective action has been performed, the drill plan may be updated.

In another example embodiment of the apparatus 200, when initiating the navigation correction action, the at least one memory 204 and the computer program code 206 are configured, with the at least one processor 202, to cause the apparatus 200 at least to automatically initiate re-navigation.

In another example embodiment of the apparatus 200, when initiating the navigation correction action, the at least one memory 204 and the computer program code 206 are configured, with the at least one processor 202, to cause the apparatus 200 at least to control at least one ground support of the drilling rig to reposition the drilling rig to an original navigation position.

In another example embodiment of the apparatus 200, when initiating the navigation correction action, the at least one memory 204, and the computer program code 206 are configured, with the at least one processor 202, to cause the apparatus 200 to at least to determine the changed orientation of the carrier 101 and compensate for the changed orientation of the carrier 101 by changing a position and/or orientation of the drilling boom 102. For example, the apparatus 200 may be configured to determine the changed orientation of the carrier 101. In another example embodiment, the apparatus 200 may be configured to obtain from another entity measurement data representing the changed orientation of the carrier 101.

In another example embodiment of the apparatus 200, when initiating the navigation correction action, the at least one memory 204, and the computer program code 206 are configured, with the at least one processor 202, to cause the apparatus 200 to at least to provide at least one control signal for correcting the navigation.

Despite the way the apparatus 200 is configured, the navigation correction action may comprise any action that will lead to correcting the orientation change determined by at least in part on the data from the measurement device 110.

In additional embodiments, the apparatus 200 may transmit a request to determine the navigation correction action based at least in part on the data from the measurement device 110.

The measurement device 110 may comprise an inclination measurement device. Or alternatively the measurement device 100 may comprise a lidar device.

FIG. 4 illustrates a flow diagram of a method 400 for initiating a navigation correction of a drilling rig, for example, the drilling rig 100 illustrated in FIG. 1. The method may comprise a computer-implemented method that may be executed, for example, by the apparatus 200.

At 401, the method may comprise controlling navigation of the drilling rig, the navigation comprising determining a position and orientation of the drilling rig with respect to a coordinate system of a drilling site.

At 402, the method may comprise receiving, during drilling of the round, data from a measurement device associated with the carrier, for example, the measurement device 110 of FIG. 1. The data may be received continuously from the measurement device. "Continuously" may mean that measurements are received from the measurement device at a regular reception rate, for example, 1, 10 or 30 times per a time unit, for example, a second. It is clear that these are only examples and any other reception rate may be used.

At 403, the method may comprise detecting an orientation change of the carrier based on data from the measurement device.

At 404, the method may comprise initiating, during drilling of the round, a navigation correction action of the drilling rig based on detecting the orientation change.

The method may further comprise optional embodiments. These optional embodiments are placed in FIG. 4 inside a dashed line box 412.

At 405, the method may comprise automatically correcting the orientation of the carrier. For example, if the apparatus 200 is configured to execute the method 400, the apparatus 200 may further be configured to automatically correct the orientation of the carrier 101.

At 406, the method 400 may comprise transmitting a notification to an operator of the drilling rig 100, to initiate at least one corrective action.

At 407 and 408, the method may comprise determining the changed orientation of the carrier and compensating for the changed orientation of the carrier 101 by changing a position and/or orientation of the drilling boom 102. In this example embodiment, if the method 400 is executed by, for example, the apparatus 200, the apparatus 200 may be configured to cause measurement of the orientation change itself and then execute the required corrective actions.

At 409, the method may comprise providing at least one control signal for correcting the navigation. The at least one control signal may refer, for example, comprise new parameters for correcting the navigation.

At 410, the method may comprise determining the navigation correction action based at least in part on the data from the measurement device. This enables a solution in which the apparatus 200 itself may determine the navigation correction action based on the data obtained from the measurement device. The apparatus 200 may be configured to determine the navigation correction action continuously or at specified time intervals.

At 411, the method may comprise transmitting a request to determine the navigation correction action based at least in part on the data from the measurement device. For example, the apparatus 200 may transmit the request to another entity that then determines the navigation correction action. This enables a solution in which the navigation correction action can be determined by an external entity, for example, a drilling site computer or a cloud-based device.

At 412, the method may comprise correcting the orientation of the carrier to a predefined position.

At 413, the method may comprise controlling navigation by re-determining a position and orientation of the drilling rig with respect to the coordinate system of a drilling site.

It is obvious to a person skilled in the art that with the advancement of technology, the basic idea of the apparatus may be implemented in various ways. The apparatus and its embodiments are thus not limited to the examples described above; instead they may vary within the scope of the claims.

## Claims

1. An apparatus (200) for controlling a drilling rig (100) during drilling of a round, the drilling rig (100) comprising a carrier (101), a drilling boom (102) attached to the carrier (101), and a measurement device (110) associated with the carrier (101), the apparatus comprising:
at least one processor (202); and
at least one memory (204) including computer program code (206), the at least one memory (204) and the computer program code configured to with the at least one processor (202), cause the apparatus at least to:
control navigation of the drilling rig (100), the navigation comprising determining a position and orientation of the drilling rig (100) with respect to a coordinate system of a drilling site;
receive, during drilling of the round, data from the measurement device (110) associated with the carrier (101);
detect an orientation change of the carrier (101) based on the data from the measurement device (110); and
initiate, during drilling of the round, a navigation correction action of the drilling rig (100) based on detecting the orientation change.

2. The apparatus (200) of claim 1, wherein when initiating the navigation correction action, the at least one memory (204) and the computer program code (206) are configured to with the at least one processor (202), cause the apparatus (200) at least to:
correct the orientation of the carrier to a predefined position.

3. The apparatus (200) of claim 1, wherein when initiating the navigation correction action, the at least one memory (204) and the computer program code (206) are configured to with the at least one processor (202), cause the apparatus (200) at least to:
control navigation by re-determining a position and orientation of the drilling rig (100) with respect to the coordinate system of a drilling site.

4. The apparatus (200) of claim 1, wherein when initiating the navigation correction action, the at least one memory (204) and the computer program code (206) are configured to with the at least one processor (202), cause the apparatus (200) at least to:
automatically correct the orientation of the carrier (101).

5. The apparatus (200) of claim 4, wherein when initiating the navigation correction action, the at least one memory (204) and the computer program code (206) are configured to with the at least one processor (202), cause the apparatus (200) at least to:
control at least one ground support of the drilling rig (100) to reposition the drilling rig (100) to an original navigation position.

6. The apparatus (200) of claim 1, wherein when initiating the navigation correction action, the at least one memory (204) and the computer program code (206) are configured to with the at least one processor (202), cause the apparatus (200) at least to:
transmit a notification to an operator of the drilling rig (100) to initiate at least one corrective action.

7. The apparatus (200) of claim 1, wherein when initiating the navigation correction action, the at least one memory (204) and the computer program code (206) are configured to with the at least one processor (202), cause the apparatus (200) at least to:
determine the changed orientation of the carrier (101); and
compensate for the changed orientation of the carrier (101) by changing a position and/or orientation of the drilling boom (102).

8. The apparatus (200) of claim 1, wherein when initiating the navigation correction action, the at least one memory (204) and the computer program code (206) are configured to with the at least one processor (202), cause the apparatus (200) at least to:
provide at least one control signal for correcting the navigation.

9. The apparatus of any of claims 1 - 8, wherein the at least one memory (204) and the computer program code (206) configured to with the at least one processor (202), cause the apparatus (200) at least to:
determine the navigation correction action based at least in part on the data from the measurement device (110).

10. The apparatus (200) of any of claims 1 - 8, wherein the at least one memory (204) and the computer program code (206) configured to with the at least one processor (202), cause the apparatus (200) at least to:
transmit a request to determine the navigation correction action based at least in part on the data from the measurement device (110).

11. The apparatus (200) of any one of claims 1 - 10, wherein the measurement device (110) comprises an inclination measurement device.

12. The apparatus (200) of any one of claims 1 - 11, wherein the measurement device (110) comprises a lidar device.

13. A method for controlling a drilling rig (100) during drilling of a round, the drilling rig (100) comprising a carrier (101), a drilling boom (102) attached to the carrier (101), and a measurement device (110) associated with the carrier (101), the method comprising:
controlling navigation of the drilling rig (110), the navigation comprising determining a position and orientation of the drilling rig (110) with respect to a coordinate system of a drilling site;
receiving, during drilling of the round, data from the measurement device (110) associated with the carrier (101);
detecting an orientation change of the carrier (101) based on the data from the measurement device (110); and
initiating, during drilling of the round, a navigation correction action of the drilling rig (100) based on detecting the orientation change.

14. A drilling rig (100) comprising:
a carrier (101);
a drilling boom (102);
a measurement device (103) associated with the carrier (101); and
the apparatus of any one of claims 1 - 12.

15. A computer program comprising instructions for causing an apparatus of any one of claims 1 - 12 to carry out the method of claim 13.
